# EUROPÄISCHE PATENTANMELDUNG

(11) **EP 4 830 814 A1**
(43) Veröffentlichungstag der Anmeldung: **28.10.2026**
(21) Anmeldenummer: 26171823.3
(22) Anmeldetag: 13.04.2026
(51) Int. Cl.: B01D 53/04, B01D 53/00, B01D 53/26, C01B 3/56, C01B 3/506

(54) **VERFAHREN ZUM REINIGEN VON WASSERSTOFFGAS**

(30) Priorität: 16.04.2025 DE 102025114954
(71) Anmelder: HYDROGENIOUS LOHC TECHNOLOGIES GMBH, 91058 Erlangen (DE)
(72) Erfinder: Seidel, Alexander, 91056 Erlangen (DE); Camacho, Benjamin, 90429 Nürnberg (DE); Amedro, Damien, 95447 Bayreuth (DE); Khan, Muhammad Jehanzaib, 91056 Erlangen (DE)
(74) Vertreter: Rau, Schneck & Hübner Patentanwälte Rechtsanwälte PartGmbB

(57) **Zusammenfassung**

Ein Verfahren zum Reinigen von Wasserstoffgas umfasst katalytisches Dehydrieren eines organischen Trägermaterials in einem Dehydrierreaktor (4) und dadurch Freisetzen von Wasserstoffgas, Abführen eines Gemisches umfassend Wasserstoffgas und zumindest teilweise entladenes Trägermaterial aus dem Dehydrierreaktor (4), Vorreinigen des Gemisches durch Abtrennen zumindest eines Teils des Trägermaterials von dem Wasserstoffgas sowie Nachreinigen des abgetrennten Wasserstoffgases umfassend die Nachreinigungsschritte Kompression und Kühlung, und/oder Abscheiden von Verunreinigungen durch adsorptive Aufreinigung und/oder durch Membranfiltration.

## Beschreibung

Der Inhalt der deutschen Patentanmeldung DE 10 2025 114 954.2 wird durch Bezugnahme hierin aufgenommen.

Die Erfindung betrifft ein Verfahren zum Reinigen von Wasserstoffgas, das durch katalytisches Dehydrieren in einem Dehydrierreaktor von einem Trägermaterial freigesetzt worden ist.

Wasserstoff kann als Energieträger an einem Trägermaterial chemisch gebunden sein. Der Wasserstoff ist zuverlässig gespeichert. Die Handhabung und der Transport des Trägermaterials sind unkompliziert und gefahrlos. Mit einem Dehydrierverfahren kann der Wasserstoff von dem Trägermaterial wieder freigesetzt werden. In Folge des Dehydrierverfahrens wird ein Gemisch aus Wasserstoffgas und dem Trägermaterial erzeugt. Das Gemisch weist Verunreinigungen auf, die für die weitere Verwendung des Wasserstoffgases unerwünscht sind.

Der Erfindung liegt die Aufgabe zugrunde, das Entfernen von Verunreinigungen von dem Wasserstoffgas zu verbessern, insbesondere zu vereinfachen, insbesondere den Aufwand für die Reinigung des Wasserstoffgases zu reduzieren und insbesondere die Reinheit des Wasserstoffgases zu erhöhen.

Diese Aufgabe ist erfindungsgemäß gelöst durch ein Verfahren mit den Merkmalen des Anspruchs 1.

Der Kern der Erfindung besteht darin, dass ein aus einem Dehydrierreaktor abgeführtes Gemisch umfassend Wasserstoffgas und zumindest teilweise entladenes Trägermaterial zunächst vorgereinigt wird, indem zumindest ein Teil des Trägermaterials von dem Wasserstoffgas abgetrennt wird, wobei anschließend das abgetrennte Wasserstoffgas nachgereinigt wird. Das Nachreinigen umfasst eine Kompression und Kühlung des Wasserstoffgases. Bevorzugt erfolgt zunächst die Kompression und anschließend die Kühlung. Die Kompression und Kühlung beim Nachreinigen weist insbesondere den Vorteil auf, dass die Reinigung besonders effizient erfolgt. Ein Spülgasstrom weist einen hohen Anteil an Verunreinigungen auf, insbesondere eine hohe Konzentration an Nebenprodukten. Die Auskondensation der Nebenprodukte kann effizient erfolgen.

Zusätzlich oder alternativ kann das Nachreinigen ein Abscheiden von Verunreinigungen durch adsorptive Aufreinigung und/oder durch Membranfiltration umfassen. Das erfindungsgemäße Verfahren ist mehrstufig, insbesondere zweistufig.

Das Gemisch wird durch katalytisches Dehydrieren eines zumindest teilweise mit Wasserstoff beladenen organischen Trägermaterials in einem Dehydrierreaktor erzeugt. Durch das Dehydrieren wird Wasserstoffgas von dem Trägermaterial freigesetzt. Das Gemisch umfasst insbesondere Verunreinigungen. Verunreinigungen, die bezüglich der Reinigung des Wasserstoffgases zu entfernen sind, sind beispielsweise organische Verunreinigungen, insbesondere Kohlenwasserstoffverbindungen und insbesondere aromatische Kohlenwasserstoffverbindungen wie Toluol, Methylcyclohexan, Dicyclohexan und/oder Benzol. Zusätzlich oder alternativ können auch Kohlenmonoxid, Kohlendioxid und/oder Wasser in dem Gemisch als Verunreinigungen enthalten sein.

Das Vorreinigen wird auch als Vorkonditionieren bezeichnet. Beim Vorreinigen werden insbesondere Verunreinigungen in Form von Kohlenwasserstoffverbindungen abgetrennt, die zuvor als Trägermaterial gedient haben, insbesondere Benzyltoluol (C₁₄H₁₄, kurz: BT), Dibenzyltoluol (C₂₁H₂₀, kurz: DBT) und/oder Toluol (C₆H₅CH₃). Diese Verunreinigungen können wieder verwendet werden, also neu mit Wasserstoffgas in einem Hydrierverfahren beladen und als Trägermaterial genutzt werden.

Nach dem Vorreinigen weist das Gemisch einen erhöhten Anteil an Wasserstoffgas auf, der insbesondere mindestens 99,8 mol-%, der insbesondere mindestens 99,9 mol-%, insbesondere mindestens 99,95 mol-%, insbesondere mindestens 99,97 mol-% und insbesondere 99,99 mol-% beträgt. Insbesondere ist das Abtrennen des Trägermaterials von dem Wasserstoffgas unvollständig. Nach dem Vorreinigen kann das Gemisch noch Anteile des Trägermaterials enthalten. Diese Anteile des Trägermaterials bilden Verunreinigungen, die bei dem nachfolgenden Nachreinigen abgetrennt werden sollen. Das Nachreinigen dient dem Entfernen von Verunreinigungen aus dem abgetrennten Wasserstoffgas. Das Nachreinigen ist eine Hauptreinigung.

Das erfindungsgemäße Verfahren ermöglicht die gezielte Einstellung eines Reinheitsgrades für das Wasserstoffgas. Insbesondere kann die gewünschte Reinheit des Wasserstoffgases durch gezielte Kombination verschiedener Reinigungsschritte eingestellt werden. Dem liegt die Erkenntnis zugrunde, dass in Abhängigkeit der beabsichtigten Nutzung des Wasserstoffgases unterschiedliche Anforderungen an die Reinheit gelten. Beispielsweise sind die Reinheitsanforderungen bei der Verwendung von Wasserstoffgas in Brennstoffzellen, insbesondere in Brennstoffzellen-Fahrzeugen, höher als bei der Einspeisung in ein Leitungsnetzwerk. Dadurch, dass erfindungsgemäß nur so viel gereinigt wird, also nur so viel Verunreinigungen entfernt werden, wie es die beabsichtigte Nutzung erfordert, kann der, insbesondere energetische, Aufwand bei der Reinigung reduziert und insbesondere minimiert werden. Insbesondere wird auch der anfallende Verlust des Wasserstoffgases reduziert. Die Emissionen werden reduziert. Das Reinigungsverfahren ist energieeffizient und/oder ressourcenschonend.

Als Trägermaterial dienen insbesondere organische Kohlenwasserstoffverbindungen, die bei Raumtemperatur flüssig sind und insbesondere auch als LOHC (liquid organic hydrogen carrier) bezeichnet werden. In einer mit Wasserstoff beladenen Form (LOHC+) kann das Trägermaterial als Perhydro-Dibenzyltoluol (DBT-H18), als Perhydro-Benzyltoluol (BT-H12), als Dicyclohexan (C₁₂H₂₂) und/oder als Methylcyclohexan (C₇H₁₄) vorliegen. Das Trägermaterial kann auch in einer zumindest teilweise mit Wasserstoff beladenen Form vorliegen wie beispielsweise teilweise hydriertes Benzyltoluol (BT-H4, BT-H6 oder BT-H10). Durch das katalytische Dehydrieren wird das Trägermaterial in eine zumindest teilweise oder vollständig von Wasserstoff entladene Form (LOHC-) überführt und dadurch Wasserstoffgas freigesetzt. In der entladenen Form liegt das Trägermaterial als Dibenzyltoluol (DBT-H0), als Benzyltoluol (BT-H0), als Biphenyl (C₁₂H₁₀) und/oder als Toluol vor.

Mit dem erfindungsgemäßen Verfahren wird der Verlust an Wasserstoffgas bei seiner Reinigung reduziert. Beim Nachreinigen ist der Verlust an Wasserstoffgas kleiner als 10 % bezogen aus den Produktstrom, insbesondere kleiner als 5 %, insbesondere kleiner als 1 % und insbesondere kleiner als 0,1 %. Insbesondere kann das Nachreinigen verlustfrei an Wasserstoff sein.

Als Wasserstoffverlust wird der Anteil des bei der Dehydrierung freigesetzten Wasserstoffgases verstanden, der in Folge der verschiedenen Reinigungsschritte vom Produktstrom des Wasserstoffgases abgesondert und für die Nutzung des Wasserstoffgases beispielsweise in einer Brennstoffzelle und/oder in einem Leitungsnetzwerk nicht zur Verfügung steht.

Ein Verfahren gemäß Anspruch 2 gewährleistet ein zuverlässiges Abtrennen des Trägermaterials von dem Wasserstoffgas. Dadurch kann ein großer Anteil des Trägermaterials zurückgewonnen und wiederverwertet werden. Das spätere Nachreinigen kann gezielter und effizienter durchgeführt werden. Der Anteil des beim Nachreinigen zu entfernenden Anteils an Trägermaterial ist reduziert. Es ist insbesondere möglich, mehrere Vorreinigungsverfahren zu kombinieren, insbesondere sequentiell durchzuführen oder in Kombination, also parallel.

Sämtliche Verbindungen, die sich von Wasserstoffgas unterscheiden und in dem Gemisch nach dem Vorreinigen noch enthalten sind, bilden Verunreinigungen für das anschließende Nachreinigen.

Bei einer Rekuperation kann die Wärme des Gemisches aus dem Dehydrierreaktor in einem Wärmetauscher vorteilhaft auf einen zu erwärmenden Fluidstrom übertragen werden, insbesondere auf das zu dehydrierende Trägermaterial. Aufgrund der Vorwärmung des Trägermaterials ist der Gesamtenergieaufwand reduziert. Durch die Abkühlung des Gemisches und die unterschiedlichen Siedepunkte von Wasserstoffgas und Trägermaterial ist eine effiziente Abtrennung des Trägermaterials zumindest größtenteils von dem Wasserstoffgas sichergestellt. Insbesondere weisen auch die weiteren Verunreinigungen andere Siedepunkte als Wasserstoffgas auf, so dass auch diese im Rahmen der Rekuperation zumindest teilweise abtrennbar sind.

Zusätzlich oder alternativ kann eine, insbesondere aktive, Kühlung als Vorreinigungsverfahren dienen, die die Abtrennung des Trägermaterials von dem Wasserstoffgas ähnlich der Rekuperation aufgrund der verschiedenen Siedepunkte begünstigt. Durch die Kühlung erfolgt eine Kondensation des Gemisches. Zur Kühlung dient insbesondere eine separate Kühlvorrichtung wie beispielsweise ein Luftkühler, ein Kaltwassersatz und/oder eine Kältemaschine. Die Abtrennung wird zusätzlich begünstigt, wenn bei der Kühlung auch eine Kompression, also eine Druckerhöhung, stattfindet. Insbesondere kann ein möglicher Kompressionsaufwand in einem späteren Nachreinigungsschritt reduziert sein, wenn bereits beim Vorreinigen eine Kompression stattfindet. Ein derartiges Verfahren ist energieeffizient. Bevorzugt erfolgt zunächst die Kompression und nachfolgend die Kühlung. Wenn Kompression und Kühlung Teil der Vorreinigung sind, ist der Investitionsaufwand reduziert und insbesondere vermieden. Insbesondere ist Kompression und Kühlung in der Vorreinigung bereits ohnehin vorhanden, sodass zusätzliche Komponenten und/oder Aggregate entbehrlich sind.

Bei einer Gaswaschung, insbesondere mittels eines Gaswäschers, wird ein Gasstrom, also das Gemisch aus dem Dehydrierreaktor, mit einem Flüssigkeitsstrom in Kontakt gebracht. Die Flüssigkeit kann Bestandteile aus dem Gasstrom aufnehmen. Als besonders vorteilhaft hat es sich erwiesen, wenn als Flüssigkeit das Trägermaterial selbst dient, um Trägermaterialanteile aus dem Gemisch abzutrennen. Insbesondere wurde gefunden, dass die in dem Gemisch enthaltenen Verunreinigungen eine hohe Löslichkeit in dem Trägermaterial haben.

Durch das Vorreinigen des Gemischs wird von dem Wasserstoffgas das Trägermaterial unaufwändig und zu großen Anteilen abgetrennt. Die späteren Nachreinigungsschritte zum Entfernen der verbliebenen Verunreinigungen von dem Wasserstoffgas können gezielt und energieeffizient ausgelegt und durchgeführt werden. Dadurch, dass beim Nachreinigen, insbesondere ausschließlich, ein Produktstrom von Wasserstoffgas zu reinigen ist, sind die Betriebskosten für die Reinigung reduziert und insbesondere minimiert. Insbesondere können die Reinigungsverfahren auf die Behandlung von Wasserstoffgas gezielt ausgerichtet werden. Die Gaswaschung ist effizient. Zusätzlich oder alternativ kann als Flüssigkeit auch Tri-Ethylen-Glycol dienen.

Mit dem Verfahren kann Wasserstoffgas mit einer Reinheit von mindestens 99,9 %, insbesondere von 99,99 %, insbesondere von 99,999 % insbesondere von 99,9995 % und insbesondere von 99,9999 % erreicht werden.

Insbesondere beträgt der Anteil an Verunreinigungen, insbesondere an Kohlenwasserstoffverbindungen, in dem gereinigten Wasserstoffgas nach dem Vorreinigen weniger als 1.000 ppmV, insbesondere weniger als 100 ppmV, insbesondere weniger als 10 ppmV, insbesondere weniger als 5 ppmV und insbesondere weniger als 1 ppmV.

Die Reihenfolge der Nachreinigungsschritte gemäß Anspruch 3 ermöglicht eine besonders effiziente Aufreinigung eines abgeschiedenen Spülgasstroms mittels Kompression und Kühlung. Das Spülgas dient zum Reinigen eines Adsorbermaterials und/oder einer Membran, an welchen sich Verunreinigungen ablagern. Um das Adsorbermaterial und/oder die Membran zu regenerieren, erfolgt eine Spülung mit dem Spülgas. Als Spülgas dient insbesondere Wasserstoffgas, das insbesondere aus dem Dehydrierreaktor stammt. Bei der Spülung einer Abscheideeinheit, die die adsorptive Aufreinigung und/oder eine Membranfiltration ermöglicht, weist der Spülgasstrom eine hohe Konzentration an Verunreinigungen auf. Das Abscheiden der Verunreinigungen erfolgt insbesondere in einer Abscheideeinheit. Die Abscheideeinheit ist insbesondere eine Adsorptionseinheit, die zur Durchführung einer Druckwechseladsorption (PSA) und/oder Temperaturwechseladsorption (TSA) dient. Die Reinigung dieses Spülgasstroms mittels Kompression und Kühlung ist besonders effizient. Es wurde erkannt, dass dieser Spülgasstrom vorteilhaft aufgereinigt werden kann und insbesondere eine aus dem Stand der Technik bekannte Verbrennung des Spülgastroms entbehrlich ist. Dadurch, dass das vorgereinigte Gemisch zunächst dem Abscheiden der Verunreinigungen zugeführt wird, wird Wasserstoffgas zuverlässig aufgereinigt. Der Wasserstoffgasverlust ist zusätzlich reduziert. Insbesondere kann das durch Kompression und Kühlung zurückgewonnene Wasserstoffgas genutzt und beispielsweise mit dem aus der Abscheideeinheit abgeschiedenen Wasserstoffgas vermischt werden.

Insbesondere kann nach Kompression und Kühlung eine Umsetzung kondensierbarer Kohlenwasserstoffverbindungen in kürzerkettige, nicht kondensierbare Kohlenwasserstoffverbindungen mittels eines nicht-thermischen Plasmas erfolgen. Dies dient zur weiteren Aufreinigung des Wasserstoffgases, um Wasserstoff enthaltende Verunreinigungen aus dem Spülgasstrom abzuführen. Unter einem nicht-thermischen Plasma wird kaltes Plasma oder Nicht-Gleichgewichtsplasma verstanden, das ein teilweise ionisiertes Gas umfasst. Es besteht kein thermodynamisches Gleichgewicht zwischen Elektronen und Molekülen. Daher ist die Gesamttemperatur des Gases niedrig und beträgt insbesondere höchstens 50°C. Nicht-thermisches Plasma kann durch eine Hochspannung zwischen zwei Elektroden erzeugt werden. Das Hochspannungspotential hängt ab von dem für die Erzeugung des Plasmas verwendeten Gases, wie beispielsweise Luft sowie von dem Abstand der Elektroden zueinander. Die im nichtthermischen Plasma vorhandenen energiereichen aktiven Spezies können den Abbau und den vorgeschrittenen Oxidationsprozess bei niedrigen Temperaturen und ausreichend niedrigem Energiebedarf initiieren.

Bei einem Verfahren gemäß Anspruch 4 wird der abgeschiedene Spülgasstrom zurückgeführt und der Kompression und Kühlung zugeführt. Dabei kann die Kompression und Kühlung Teil der Vorreinigung und/oder Teil der Nachreinigung sein.

Die Kompression und Kühlung kann ausschließlich die Vorreinigung bilden, sodass die Vorreinigung keine weiteren Verfahrensschritte umfasst. In diesem Fall besteht die Nachreinigung ausschließlich aus der adsorptiven Aufreinigung, insbesondere einer Druckwechseladsorption. Es wurde insbesondere erkannt, dass aufgrund des geänderten Gleichgewichtszustands, der in der Kompression und Kühlung infolge des rückgeführten Spülgasstroms erzeugt wird, der Anteil an Verunreinigungen, der in der Kompression und Kühlung auskondensiert werden kann, erhöht ist. Insbesondere ist es dadurch möglich, dass die Menge an Abgasen reduziert und insbesondere verhindert ist. Insbesondere kann ein Abgasstrom gänzlich vermieden werden.

Vorteilhaft ist es, wenn ein veränderlich einstellbarer Anteil des abgeschiedenen Spülgasstroms rückgeführt wird. Der nicht rückgeführte Spülgasstrom kann als Abgas verwertet, insbesondere thermisch verwertet, also verbrannt werden. Die Größe des Anteils des rückgeführten Spülgasstroms kann insbesondere automatisiert veränderlich eingestellt werden, insbesondere mittels einer zentralen Steuerungseinheit. Dabei kann der Anteil des rückgeführten Spülgasstroms beispielsweise zeitabhängig stufenweise oder kontinuierlich veränderlich eingestellt werden. Eine Anpassung des rückgeführten Spülgasstroms kann auch bedarfsangepasst erfolgen.

Alternativ kann das Nachreinigen gemäß Anspruch 5 auch derart ausgeführt sein, dass zunächst die Kompression und Kühlung des Gemisches aus der Vorreinigung erfolgen. Vor allem schwer desorbierbare Verunreinigungen wie Benzyltoluol und größere Kohlenwasserstoffmoleküle werden zuverlässig von dem Wasserstoffgas abgetrennt. Größere Kohlenwasserstoffmoleküle in diesem Verständnis sind insbesondere Methylfluoren und/oder Diphenylmethan. Grundsätzlich gilt, dass alle Verbindungen, die mindestens 14 Kohlenstoffatome aufweisen, größere Kohlenwasserstoffmoleküle sind. Zusätzlich oder alternativ können auch zyklische Kohlenwasserstoffverbindungen wie Benzol, Toluol, Methylcyclohexan, Cyclohexan und/oder Xylol bei der Nachreinigung abgetrennt werden.

Bei dem anschließenden Abscheiden der Verunreinigungen ist eine effiziente Aufreinigung mit höchster Reinheit möglich. Dadurch, dass die schwer desorbierbaren Komponenten bereits zuvor durch Kompression und Kühlung abgetrennt worden sind, kann insbesondere das Adsorbermaterial und/oder die Membran geschont werden, wodurch Stand- und Zyklenzeit verbessert werden. Die Nutzungsdauer des Adsorbermaterials bis zu einem Wechsel oder einer Regeneration ist signifikant erhöht. Außerdem ermöglicht das Verfahren eine kleinere Dimensionierung der Abscheideeinheit.

Das Entfernen von Kohlenwasserstoffverbindungen durch Kompression und Kühlung erfolgt insbesondere bei einer Temperatur von höchstens 2°C, insbesondere bei einer Temperatur von höchstens 0°C, insbesondere bei einer Temperatur von höchstens -10°C und inbesondere bei einer Temperatur von höchstens -25°C, sowie bei einem Relativdruck von mindestens 20 barg, insbesondere mindestens 35 barg, insbesondere mindestens 40 barg, insbesondere mindestens 60 barg, insbesondere mindestens 80 barg, insbesondere mindestens 90 barg und insbesondere mindestens 100 barg.

Eine adsorptive Aufreinigung gemäß Anspruch 6 hat sich als besonders effizient erwiesen. In einem Adsorberbehälter, der als Aufreinigungseinheit dient, ist das Adsorbermaterial, insbesondere als Schüttung, insbesondere in einem Adsorberbett, angeordnet.

Stromaufwärts des Adsorberbehälters kann ein Hydrierreaktor angeordnet sein, um unerwünschte Verunreinigungen wie beispielsweise Kohlenstoffmonoxid (CO), in andere, insbesondere besser handhabbare, Verunreinigungen wie beispielsweise Methan (CH₄) umzuformen. Zusätzlich oder alternativ kann dem Adsorberbehälter eine Wäscherkolonne vorangestellt sein, um die Wasserstoffqualität, insbesondere die Wasserstoffreinheit, am Eingang des Adsorberbehälters zu verbessern, insbesondere zu erhöhen. Der Hydrierreaktor kann auch stromabwärts der Wäscherkolonne angeordnet sein. Die Wäscherkolonne ist insbesondere geeignet, um Verunreinigungen zu entfernen, die von dem Trägermaterial gut absorbiert werden können. Die Wäscherkolonne entfernt Verunreinigungen vom Wasserstoff. Diese Verunreinigungen werden im Trägermaterial angereichert. Die hohe Löslichkeit dieser Verunreinigungen in dem Trägermaterial ist vorteilhaft.

Die Wäscherkolonne kann in Form eines Behälters als Füllkörper mit Trennboden oder Sprühturmkolonne ausgeführt sein, so dass ausreichend Oberfläche zur Kontaktierung von Gas und Flüssigkeit vorhanden ist. Das Wasserstoffgemisch strömt, insbesondere von unten, in den Behälter ein und durchströmt diesen vertikal nach oben. Von oben wird kaltes Waschfluid, insbesondere Trägermaterial, in die Kolonne gegeben, welches bei Kontaktierung des Gasgemisches die Verunreinigungen absorbiert, also einlöst.

Besonders vorteilhaft ist es, wenn Prozesswärme des Dehydrierens in den Adsorberbehälter, insbesondere in das Bett des Adsorbermaterials, eingekoppelt wird. Dadurch kann die Desorption beschleunigt werden. Die Wärmeeinkopplung kann entweder direkt über eine Behälterheizung oder indirekt durch das Einströmen eines heißen Gases erfolgen.

Die Verwendung unterschiedlicher Adsorbermaterialen gemäß Anspruch 7 ermöglicht eine zielgerichtete, insbesondere selektive, Reinigung des Gemischs. Die Adsorbermaterialien können als Mischung, insbesondere als homogene Mischung vorliegen. Alternativ ist es möglich, die unterschiedlichen Adsorbermaterialien getrennt anzuordnen, insbesondere in getrennten Bereichen, insbesondere als geschichtete Schüttung. Denkbar ist es auch, dass die unterschiedlichen Adsorbermaterialien baulich voneinander getrennt sind, beispielsweise mittels gasdurchlässiger Trennböden und/oder Siebböden oder in unterschiedlichen gasdurchlässigen Behältnissen innerhalb des Adsorberbehälters angeordnet.

Insbesondere dient als erstes Adsorbermaterial Kieselgel, insbesondere Silicagel, als zweites Adsorbermaterial Aktivkohle und als drittes Adsorbermaterial Zeolith. Es wurde gefunden, dass mit dem Kieselgel, das insbesondere in einem ersten Bereich angeordnet ist, eine effiziente Abtrennung des Trägermaterials, insbesondere von LOHC+ und/oder LOHC-, möglich ist. Die Aktivkohle, die insbesondere in einem zweiten Bereich angeordnet ist, dient dazu, weitere Kohlenwasserstoffverbindungen wie insbesondere Cyclohexan und/oder Methylcyclohexan zu entfernen. Zeolith, das insbesondere in einem dritten Bereich angeordnet ist, dient für eine effiziente Wasserabfuhr aus dem Gemisch.

Das Spülen des Adsorberhälters gemäß Anspruch 8 regeneriert das mindestens eine Adsorbermaterial. Insbesondere bewirkt ein regelmäßiges, insbesondere zyklisches, Spülen eine dauerhafte Mindestaktivität des Adsorbermaterials. Der Wirkungsgrad des Reinigungsverfahrens ist erhöht. Als Spülgas dient insbesondere Wasserstoffgas, insbesondere das aus dem Dehydrierreaktor freigesetzte Wasserstoffgas. Durch das Spülen des Adsorbermaterials werden Verunreinigungen davon gelöst, also desorbiert. Es ist insbesondere vorteilhaft, wenn mindestens zwei Adsorberbehälter vorhanden sind, die insbesondere im Parallelbetrieb betrieben werden können, so dass mindestens ein Adsorberbehälter zur adsorptiven Reinigung des Wasserstoffgases und mindestens ein weiterer Adsorberbehälter zum Spülen des Adsorbermaterials genutzt werden können. Dadurch ist ein kontinuierlicher Reinigungsbetrieb gewährleistet. Eine Unterbrechung der adsorptiven Reinigung wegen einer Spülung des Adsorberbehälters ist vermieden, wenn der Wasserstoffgasstrom jeweils anderen Adsorberbehälter gereinigt werden kann.

Es ist alternativ möglich, die mindestens zwei Adsorberbehälter in Reihe zu schalten. Dadurch kann ein Durchbruch des ersten, stromaufwärtigen Behälters mit dem zweiten, stromabwärtigen Behälter abgefangen werden. Der erste Behälter könnte insbesondere regeneriert werden, während der zweite Behälter für den Adsorbtionsbetrieb genutzt wird. Der gereinigte erste Behälter kann nach seiner Regeneration so verschaltet werden, dass er dem zweiten, im Reinigungsbetrieb befindlichen Behälter nachgeschaltet wird. Dadurch kann die Reihenfolge der Behälter entlang der Fluidströmung getauscht oder zumindest verändert werden. Insbesondere ändert sich die Reihenfolge der Behälter zyklisch, wobei der regenerierte Behälter entlang der Fluidströmungsrichtung nachrangig positioniert wird, um einen Durchbruch des stromaufwärtigen Behälters abzufangen.

Ein Verhältnis der Stoffströme gemäß Anspruch 9 hat sich als besonders vorteilhaft erwiesen. Als Produktstrom wird der Stoffstrom von Wasserstoffgas verstanden, der zum adsorptiven Aufreinigen in den Adsorberbehälter zugeführt wird. Als Spülgasstrom wird der Stoffstrom des Spülgases verstanden, das zum Spülen des Adsorbermaterials dient. Typischerweise sind die Stoffströme durch den Adsorberbehälter gegensätzlich orientiert. Das Desorbieren der Verunreinigungen von dem Adsorbermaterial ist dadurch begünstigt.

Dadurch, dass der Spülgasstrom im Vergleich zum Produktstrom sehr viel kleiner ist, ist der Anteil der darin enthaltenen Verunreinigungen, die durch die Desorption freigesetzt und vom Spülgasstrom mitgenommen werden, vergleichsweise hoch. Der Reinigungsaufwand für das Entfernen der Verunreinigungen aus dem Spülgasstrom ist dadurch signifikant reduziert. Der Spülgasstrom weist einen Anteil an Verunreinigungen auf, die vom Adsorbermaterial ausgespült worden sind. Insbesondere werden mindestens 95 Gew.-% der Verunreinigungen, die vom Adsorbermaterial aufgereinigt wurden, mit dem Spülgasstrom ausgespült, insbesondere mindestens 98 Gew.-% und insbesondere mindestens 99 Gew.-%.

Der Spülgasstrom kann effizient aufgereinigt werden. Die Gesamtmenge an Verunreinigungen, insbesondere an Kohlenwasserstoffverbindungen, in dem aufgereinigten Spülgasstrom ist kleiner als 50000 ppmV, insbesondere kleiner als 10000 ppmV und insbesondere kleiner als 2000 ppmV. Der aufgereinigte Spülgasstrom kann zurückgeführt und als Produktgasstrom genutzt werden, entweder zum erneuten Spülen des Adsorbermaterials oder zur Nutzung beispielsweise in einer Brennstoffzelle oder in einer Pipeline. Insbesondere ist die Gesamtmenge an Verunreinigungen, insbesondere an Kohlenwasserstoffverbindungen, in dem Produktstrom, der insbesondere rückgeführtes, aufgereinigtes Spülgas aufweist, kleiner als 3000 ppmV, insbesondere kleiner als 1000 ppmV, insbesondere kleiner als 100 ppmV und insbesondere kleiner als 10 ppmV. Der Produktstrom, der insbesondere rückgeführtes, aufgereinigtes Spülgas aufweist, weist einen Taupunkt auf von kleiner als -2 °C bei 100 bara, insbesondere kleiner als -2 °C bei 70 bara und insbesondere von -2 °C bei 30 bara.

Das gereinigte Wasserstoffgas kann beispielsweise in ein Wasserstoff-Leitungsnetzwerk, das inbesondere öffentlich oder lokal ausgeführt ist, eingespeist werden und/oder über eine direkte Fluidverbindung, insbesondere über eine Wasserstoffversorgungsleitung, zu einem Wasserstoffverbraucher transportiert werden. Der Wasserstoffverbraucher ist insbesondere eine Brennstoffzelle, insbesondere eine Festoxid-Brennstoffzelle (SOFC) oder eine Polymerelektrolytmembran-Brennstoffzelle (PEM).

Ein Verfahren gemäß Anspruch 10 weist eine insgesamt energetisch verbesserte Bilanz auf. Insbesondere ist der Aufwand für das Nachbehandeln der Abgase entbehrlich. Dadurch, dass die Abgase nur einen geringen Anteil an wertvollem Wasserstoffgas, aber einen hohen Anteil an nicht nutzbaren Kohlenwasserstoffverbindungen umfassen und die Abgase trotzdem gut brennbar sind, kann unaufwändig und effizient Verbrennungswärme erzeugt werden, die an den Dehydrierreaktor übertragen werden kann. Verbrannt wird insbesondere ein Verunreinigungsgemisch, insbesondere das Spülgas, das zumindest anteilig Wasserstoffgas enthalten kann. Wasserstoff enthaltende Verunreinigungen sind insbesondere nicht die Wasserstoffatome enthaltenden Moleküle wie beispielsweise das Trägermaterial. Insbesondere werden die Wasserstoff enthaltenden Verunreinigungen als "H₂-Waste Gas" bezeichnet werden. Es ist grundsätzlich möglich, dass auch Trägermaterial, das insbesondere als Kondensat in einem vorgelagerten Reinigungsschritt anfällt, verbrannt oder zumindest mit verbrannt wird.

Ein Verfahren gemäß Anspruch 11 erhöht zusätzlich die Wasserstoffgasausbeute. Der Wasserstoffverlust beträgt höchstens 5 mol-%, insbesondere weniger als 3 mol-% und insbesondere weniger als 1 mol-%.

Eine Regelung gemäß Anspruch 12 ermöglicht eine effiziente Durchführung des Verfahrens. Insbesondere ist es vorteilhaft, die Aufteilung der Stoffströme, insbesondere abhängig von einer gemessenen Qualität, insbesondere Reinheit, der jeweiligen Stoffströme zu regeln. Dazu dient insbesondere eine zentrale Regelungseinheit, die in, insbesondere bidirektionaler, Signalverbindung mit entsprechenden Sensoren und/oder Stellgliedern, wie Ventilen und/oder Pumpen, steht. Es ist insbesondere denkbar, dass bei dem Verfahren gemäß Anspruch 3 der in der Abscheideeinheit nachgereinigte Wasserstoffstrom mit einem Wasserstoffstrom gemischt wird, der unmittelbar nach dem Vorreinigen und insbesondere vor der Zuführung in die Abscheideeinheit abgezweigt worden ist. Zusätzlich oder alternativ ist eine Zumischung eines Wasserstoffgasstroms möglich, der aus der Reinigung des Spülgasstroms in der Kompression und Kühlung stammt. Dadurch können die Wasserstoffverluste einerseits sowie die Gesamtemissionen andererseits reduziert werden. Vorteilhaft ist es, wenn das Zumischen in Abhängigkeit einer Qualitätsmessung erfolgt. Insbesondere erfolgt die Qualitätsmessung des Wasserstoffstroms als aufgereinigtes Wasserstoffgas vor der Zuführung in eine Verbrauchseinheit. In Abhängigkeit der Reinheit des Wasserstoffgases können Zumischungen der verschiedenen Wasserstoffgasströme vorteilhaft und tolerabel sein. Zusätzlich oder alternativ ist es auch denkbar, die Zyklenzeit für das Adsorbermaterial in der Abscheideeinheit zu berücksichtigen.

Ein Verfahren gemäß Anspruch 13 ermöglicht eine verbesserte Aufreinigung des verunreinigten Wasserstoffgases. Die mehrstufige Kompression und Kühlung umfasst eine sequentielle Anordnung von jeweils Kompression und Kühlung, insbesondere drei Stufen. Die mehrstufige Kompression und Kühlung kann Teil der Vorreinigung und/oder der Nahreinigung sein. Vorteilhaft ist es, wenn nach jeder Stufe eine Kondensatableitung der Verunreinigungen möglich ist.

Ein Verfahren gemäß Anspruch 14 ermöglicht eine vorteilhafte Temperierung des Wasserstoffgasstroms. Die zusätzliche Kühlung kann mehrere sequentiell angeordnete Kühleinheiten umfassen. Zusätzlich oder alternativ kann die zusätzliche Kühlung auch parallel angeordnete Kühleinheiten umfassen. Dadurch kann eine Redundanz der Kühleinheiten erzeugt werden, insbesondere für den Fall, dass eine der Kühleinheiten vereist ist und deshalb nicht im Betrieb zur Verfügung stehen kann. Vorteilhaft ist es, wenn aus jeder Kühleinheit eine separate Kondensatabteilung für die Verunreinigungen möglich ist.

Die zusätzliche Kühleinheit kann eine optionale Temperierungseinheit aufweisen, um eine zusätzliche Temperaturanpassung des Wasserstoffgasstroms zu ermöglichen. Die Temperierungseinheit kann insbesondere auch eine Heizeinheit umfassen.

Ein Verfahren gemäß Anspruch 15 reduziert das Risiko des Vereisens einer Kühleinheit.

Sowohl die in den Patentansprüchen angegebenen Merkmale als auch die in den nachfolgenden Ausführungsbeispielen von Anlagen zum Reinigen von Wasserstoffgas angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkungen dar, sondern weisen im Wesentlichen lediglich beispielhaften Charakter auf.

Wesentliche Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung einer Anlage zur Durchführung des erfindungsgemäßen Verfahrens, wobei zum Nachreinigen zunächst eine Kompression und Kühlung und anschließend ein Abscheiden des so aufgereinigten Wasserstoffstroms erfolgt,
- Fig. 2: eine Fig. 1 entsprechende Darstellung einer Anlage, bei der zum Nachreinigen zunächst ein Abscheiden von Verunreinigungen erfolgt, wobei ein Spülgasstrom der Abscheideeinheit einer Kompression und Kühlung zugeführt wird,
- Fig. 3: eine Fig. 2 entsprechende Darstellung einer Anlage mit zusätzlichen Komponenten zum Nachreinigen des Spülgasstroms,
- Fig. 4: eine Fig. 2 entsprechende Darstellung einer Anlage mit einer Spülgasstromrückführung,
- Fig. 5: eine detaillierte Darstellung einer mehrstufigen Kompression und Kühlung,
- Fig. 6: eine Fig. 5 entsprechende Darstellung einer mehrstufigen Kompression und Kühlung mit parallelen Strängen,
- Fig. 7: eine Fig. 5 entsprechende Darstellung mit einer zusätzlichen Kühlung.

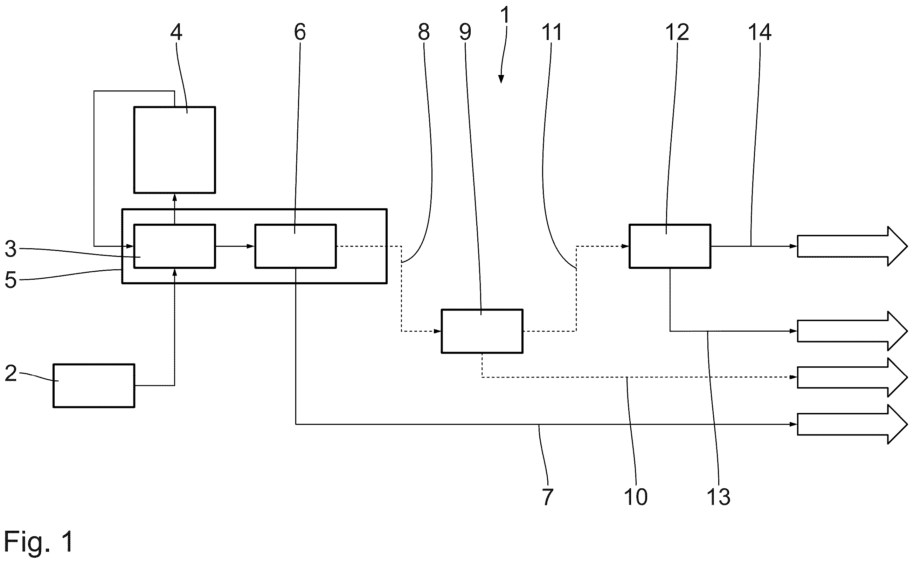

Eine in Fig. 1 als Ganzes mit 1 gekennzeichnete Anlage dient zum Reinigen von Wasserstoffgas. Die Anlage 1 umfasst eine Trägermaterialquelle 2, mittels der das Trägermaterial, insbesondere in einer zumindest teilweise beladenen Form, in der Anlage zur Verfügung gestellt wird. Die Trägermaterialquelle 2 ist insbesondere ein Speicherbehälter. Zusätzlich oder alternativ kann die Trägermaterialquelle 2 auch durch einen Leitungsanschluss an ein, insbesondere öffentlichen und/oder überregionales, Leitungsnetz für Trägermaterial ausgeführt sein.

Die Trägermaterialquelle 2 ist fluidtechnisch mit einem Rekuperator 3 verbunden, der fluidtechnisch an einen Dehydrierreaktor 4 angeschlossen ist. In dem Dehydrierreaktor 4 wird das beladene Trägermaterial, insbesondere Perhydro-Dibenzyltoluol, katalytisch dehydriert. Dadurch wird ein Gemisch erzeugt, das zumindest Wasserstoffgas und zumindest teilweise entladenes Trägermaterial umfasst.

Der Dehydrierreaktor 4 ist fluidtechnisch an eine Einheit 5 zum Vorreinigen des Gemisches aus Wasserstoffgas und Trägermaterial angeschlossen. Die Einheit 5 zum Vorreinigen des Gemisches umfasst den Rekuperator 3 und einen stromabwärts des Rekuperators 3 angeordneten, fluidtechnisch mit dem Rekuperator 3 verbundenen Phasentrenner 6.

Gemäß dem gezeigten Ausführungsbeispiel ist die Einheit 5 zum Vorreinigen des Gemischs durch den Rekuperator 3 und den Phasentrenner 6 gebildet. Es ist aber auch denkbar, dass die Einheit 5 zum Vorreinigen andere und/oder zusätzliche Komponenten umfasst beispielsweise eine Kühleinheit und/oder eine Kompressionseinheit. Die wesentliche Aufgabe der Einheit 5 zum Vorreinigen ist es, von dem Wasserstoffgas das Trägermaterial größtenteils abzutrennen.

Berechnungen der Anmelderin haben gezeigt, dass beispielsweise der Anteil an Cyclohexan um über 65 %, der Anteil an Toluol um über 70 %, der Anteil an Methylcyclohexan um über 90 %, der Anteil an Xylol um über 60 %, der Anteil an Perhydro-Dibenzyltoluol um über 65 % reduziert werden kann und Dimethylcyclohexan im Wesentlichen vollständig entfernt werden kann.

An die Einheit 5 zum Vorreinigen ist eine Verunreinigungsabführleitung 7 angeschlossen, um in der Einheit 5, insbesondere im Phasentrenner 6, abgetrennte Verunreinigungen, insbesondere abgetrenntes Trägermaterial, abzuführen. Mittels der Verunreinigungsabführleitung 7 kann das Trägermaterial einer Wiederverwendung zugeführt werden. Insbesondere kann das Trägermaterial in einem nicht dargestellten Hydrierreaktor hydriert und anschließend der Trägermaterialquelle 2 wieder zugeführt werden.

Ferner ist an die Einheit 5 zum Vorreinigen eine Stoffstromleitung 8 angeschlossen, insbesondere an den Phasentrenner 6. Die Stoffstromleitung 8 mündet in eine erste Reinigungseinheit 9, die als Kühlungs- und Kompressions-Einheit ausgeführt ist. In der ersten Reinigungseinheit 9 werden durch Erhöhung des Drucks und Kühlung des komprimierten Gases Verunreinigungen auskondensiert, so dass diese aus der ersten Reinigungseinheit 9 als Flüssigkeit abgeführt werden können. Der aus der ersten Reinigungseinheit 9 abzuführende Verunreinigungsstrom umfasst überwiegend verflüssigte Verunreinigungen, die mittels einer weiteren Verunreinigungsleitung 10 abgeführt werden können.

Die erste Reinigungseinheit 9 umfasst mindestens eine und insbesondere mehrere Kompressionsstufen, Kühleinrichtungen und Kondensatabscheider. Diese Komponenten können innerhalb eines Gerätes, insbesondere in einem gemeinsamen Gehäuse, integriert sein. Insbesondere können Kondensatabscheidung und Kühlung in einem Kompressor angeordnet sein, welcher insbesondere mehrere Stufen aufweist. Alternativ können die einzelnen Komponenten baulich voneinander getrennt sein, wobei insbesondere eine erste Stufe einen ersten Kompressor, eine erste Kühlung und einen ersten Kondensatabscheider, insbesondere in dieser Reihenfolge entlang des Fluidstroms, aufweist, wobei sich ein zweiter Kompressor mit zweiter Kühlung und zweitem Kondensatabscheider usw. anschließen kann. Es ist denkbar, dass die Anzahl der Komponenten für die verschiedenen Stufen variiert. Beispielsweise kann eine Kühlung und/oder Kondensatabscheidung erst nach dem zweiten Kompressor, also in der zweiten Kompressionsstufe, vorhanden sein.

Die erste Reinigungseinheit 9 ist mittels einer Reinigungsverbindungsleitung 11 mit einer zweiten Reinigungseinheit 12 fluidtechnisch verbunden.

Die zweite Reinigungseinheit 12 ist als Abscheideeinheit ausgeführt und dient insbesondere zur adsorptiven Aufreinigung durch Druckwechseladsorption und/oder Temperaturwechseladsorption. Zusätzlich oder alternativ kann die Abscheideeinheit auch einen Membranfilter aufweisen.

An die zweite Reinigungseinheit 12 ist eine zweite Verunreinigungsleitung 13 angeschlossen, um Verunreinigungen aus der zweiten Reinigungseinheit 12 abzuführen. Ferner ist an die zweite Reinigungseinheit 12 eine Wasserstoffgasabführleitung 14 angeschlossen, um das in der zweiten Reinigungseinheit 12 gereinigte Wasserstoffgas seiner Verwendung zuzuführen, insbesondere einer Brennstoffzelle. Denkbar ist auch, dass die Wasserstoffgasabführleitung 14 in einen Pufferbehälter mündet, um das gereinigte Wasserstoffgas zumindest vorübergehend zwischenzuspeichern.

Nachfolgend wird ein Verfahren zum Reinigen von Wasserstoffgas mit der Anlage 1 näher erläutert.

LOHC, insbesondere Methylcyclohexan, Perhydro-Benzyltoluol, Perhydro-Dibenzyltoluol sowie Mischungen daraus, wird aus der Trägermaterialquelle 2 dem Rekuperator 3 zugeführt, dort vorgewärmt und anschließend dem Dehydrierreaktor 4 zugeführt. Dort findet eine katalytische Dehydrierreaktion statt. Dadurch wird Wasserstoffgas vom Trägermaterial freigesetzt und das Trägermaterial zumindest teilweise entladen.

Ein Gemisch, das neben Wasserstoffgas und entladenem Trägermaterial auch Verunreinigungen aufweist, wird der Einheit 5 zum Vorreinigen zugeführt. Das bedeutet, dass das Gemisch zunächst im Rekuperator 3 abgekühlt und anschließend im Phasentrenner 6 voneinander getrennt wird. In Folge der Kühlung des Gemischs im Rekuperator 3 kondensieren die Kohlenwasserstoffverbindungen, also insbesondere das Trägermaterial in beladener und/oder entladener Form sowie mögliche weitere Verunreinigungen. Diese kondensierten Flüssiganteile werden über die Verunreinigungsabführleitung 7 aus der Einheit 5, insbesondere dem Phasentrenner 6, abgeführt.

Das Wasserstoffgas liegt in dem Stoffstrom, der über die Stoffstromleitung 8 der ersten Reinigungseinheit 9 zugeführt wird, mit einer hohen Reinheit von mindestens 98 mol-% vor. In der ersten Reinigungseinheit 9 werden vor allem schwer desorbierbare Komponenten wie Benzyltoluol und größere Kohlenwasserstoffverbindungen und/oder aromatische Kohlenwasserstoffverbindungen aus dem Wasserstoffstrom abgetrennt und über die erste Verunreinigungsleitung 10 abgeführt. Der so aufgereinigte Wasserstoffstrom wird mittels der Reinigungsleitung 11 aus der ersten Reinigungseinheit 9 der zweiten Reinigungseinheit 12 vollständig oder teilweise zugeführt und dort weiter aufgereinigt. Es ist auch denkbar, dass zumindest ein Teil des in der ersten Reinigungseinheit 9 aufgereinigten Wasserstoffgases über eine in Fig. 1 nicht dargestellte Bypassleitung an der zweiten Reinigungseinheit 12 vorbei und insbesondere unmittelbar der Wasserstoffgasabführleitung 14 zugeführt wird.

In der zweiten Reinigungseinheit 12 findet eine abschließende Aufreinigung statt. Dadurch, dass die schwer desorbierbaren Komponenten zuvor in der ersten Reinigungseinheit 9 bereits abgetrennt worden sind, ist die Belastung für Adsorbermaterial in der zweiten Reinigungseinheit 12 reduziert. Insbesondere kann dadurch verhindert werden, dass schwer von dem Adsorbermaterial wieder zu lösende Komponenten im Sinne einer Regeneration des Adsorbermaterials weniger abgeschieden werden. Dadurch kann die Stand- und Zyklenzeit der zweiten Reinigungseinheit 12 gesteigert werden.

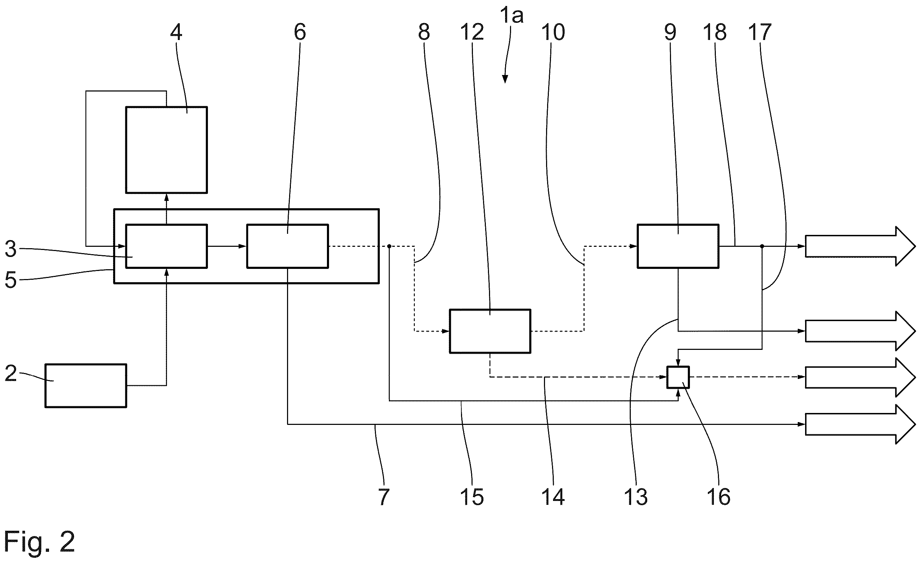

Im Folgenden wird unter Bezugnahme auf Fig. 2 ein weiteres Ausführungsbeispiel einer Anordnung beschrieben. Konstruktiv identische Bauteile erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Wesentlicher Unterschied bei der Anlage 1a ist, dass der aus der Einheit 5 abgegebene Stoffstrom mittels der Stoffstromleitung 8 zunächst der zweiten Reinigungseinheit 12 zugeführt wird. Die erste Reinigungseinheit 9 ist über die erste Verunreinigungsleitung 10 an die zweite Reinigungseinheit 12 angeschlossen. Das in der zweiten Reinigungseinheit 12 gereinigte Wasserstoffgas wird mittels der Wasserstoffgasabführleitung 14 als aufgereinigtes Wasserstoffgas einer weiteren Verwendung zugeführt.

Die Anlage 1a weist zusätzlich eine Stoffstrom-Bypassleitung 15 auf, um zumindest einen Teil des aus der Einheit 5 zum Vorreinigen abgegebenen Stoffstroms an der zweiten Reinigungseinheit 12 vorbeizuführen und in einer Mischeinheit 16 dem gereinigten Wasserstoffgas aus der zweiten Reinigungseinheit 12 zuzumischen. An die Mischeinheit 16 ist eine Wasserstoffgas-Bypassleitung 17 angeschlossen, die Wasserstoffgas, das in der ersten Reinigungseinheit 9 gereinigt worden ist, für eine mögliche Zumischung in der Mischeinheit 16 zurückführt.

Das mittels der ersten Verunreinigungsleitung 10 von der zweiten Reinigungseinheit 12 in die erste Reinigungseinheit 9 zugeführte Medium ist insbesondere ein Spülgasstrom, mit dem adsorbierte Verunreinigungen von dem Adsorbermaterial in der zweiten Reinigungseinheit 12 desorbiert werden.

Der wesentliche Vorteil bei dieser Anordnung und dem damit durchgeführten Verfahren besteht darin, dass der über die erste Verunreinigungsleitung 10 abgeführte, Verunreinigungen aufweisende Spülgasstrom eine vergleichsweise hohe Verunreinigungskonzentration aufweist. Dadurch, dass der Volumenstrom selbst vergleichsweise gering ist, ist eine Aufreinigung effizient.

Besonders vorteilhaft ist eine geregelte Durchführung des Reinigungsverfahrens mit der Anlage 1a. Dazu kann die Anlage 1a nicht dargestellte Qualitätsmesseinheiten aufweisen, um insbesondere die Qualität der Stoffströme zu messen. Dies betrifft insbesondere die Wasserstoffgasabführleitung 14, insbesondere sowohl stromaufwärts als auch stromabwärts der Mischeinheit 16. Eine Qualitätsmessung ist aber auch am Ausgang der Einheit 5 zum Vorreinigen zweckmäßig, insbesondere vor der Aufteilung in die Stoffstromleitung 8 und die Stoffstrom-Bypassleitung 15. Zusätzlich oder alternativ ist eine Qualitätsmessung auch an der die erste Reinigungseinheit 9 angeschlossene Wasserstoffgasleitung 18 vorteilhaft, um eine mögliche Rückführung über die Wasserstoffgas-Bypassleitung 17 in die Mischeinheit 16 zu regeln.

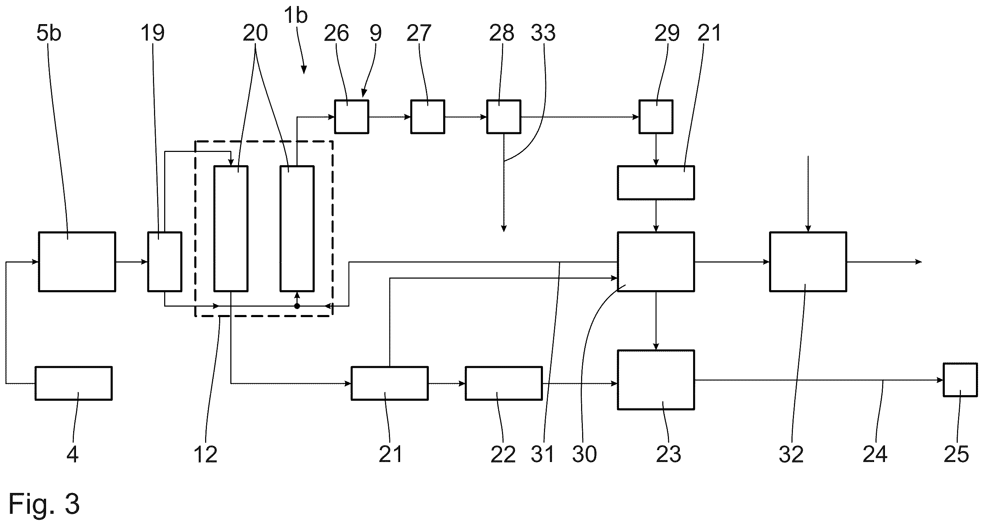

Im Folgenden wird unter Bezugnahme auf Fig. 3 ein weiteres Ausführungsbeispiel einer Anlage beschrieben. Konstruktiv identische Bauteile erhalten dieselben Bezugszeichen wie die vorherigen Ausführungsbeispiele, auf deren Beschreibung hiermit verwiesen wird. Konstruktiv unterschiedliche, jedoch funktionell gleichartige Teile erhalten dieselben Bezugszeichen mit einem nachgestellten b.

Die Einheit 5b zum Vorreinigen des Gemisches umfasst insbesondere einen Gaswäscher, der auch als Nassabscheider oder Absorber bezeichnet wird. Der Gaswäscher ist ein verfahrenstechnischer Apparat, in dem ein einen Gasstrom enthaltender Fluidstrom mit einem Flüssigkeitsstrom in Kontakt gebracht wird, um Bestandteile des Gasstroms in der Flüssigkeit aufzugeben. Als Waschflüssigkeit dient insbesondere das Trägermaterial, eine dem Trägermaterial ähnliche Kohlenwasserstoffverbindung, insbesondere Benzyltoluol und/oder Dibenzyltoluol, oder Triethylenglycol.

Der Gaswäscher ist insbesondere als Wäscherkolonne ausgeführt.

Die Einheit 5b zum Vorreinigen kann zusätzlich oder alternativ zu dem Gaswäscher einen Rekuperator, eine Kondensationseinheit, eine Kühleinheit und/oder einen Phasentrenner aufweisen.

Stromabwärts der Einheit 5b ist ein erstes Splitventil 19 angeordnet. Das erste Splitventil 19 dient zum Aufteilen des Fluidstroms, also des in der Einheit 5b vorgereinigten Gemisches. Mit dem ersten Splitventil 19 stehen mehrere Adsorberbehälter 20 in Fluidverbindung. Die Adsorberbehälter 20 bilden die zweite Reinigungseinheit 12. Die Adsorberbehälter 20 sind identisch ausgeführt und weisen jeweils ein Adsorbermaterial auf, dass insbesondere als Schüttung ausgeführt ist. Insbesondere dient das Adsorbermaterial zur Abtrennung von Wasser und von Kohlenwasserstoffverbindungen. Es wurde erkannt, dass es vorteilhaft ist, eine geschichtete Adsorberschüttung zu verwenden, um den unterschiedlichen Adsorptions- und Desorptionseigenschaften der verschiedenen Kohlenwasserstoffverbindungen und Wasser Rechnung zu tragen.

Mittels des ersten Splitventils 19 und entsprechender Fluidleitungen die in Fig. 3 exemplarisch nur für einen Schaltzustand dargestellt sind, können die Adsorberbehälter 20 im Adsorberbetrieb durchströmt werden, der gemäß Fig. 1 von oben nach unten orientiert ist. Alternativ kann der Adsorberbehälter 20 im Spülbetrieb durchströmt und somit gespült werden. Der Spülgasstrom ist gemäß Fig. 3 von unten nach oben orientiert. Insbesondere ist die Spülgasströmung der Produktgasströmung durch den Adsorberbehälter 5 entgegengesetzt orientiert.

An den im Adsorberbetrieb befindlichen Adsorberbehälter 20 ist ein Wasserstoffgas-Analytikgerät 21 angeschlossen, um den Anteil der Verunreinigungen in dem abgetrennten Wasserstoffgas zu ermitteln. Stromabwärts des Wasserstoffgas-Analytikgeräts 21 kann eine Entfernungseinheit 22 angeordnet sein, um in dem Wasserstoffgas noch enthaltene Verunreinigungen zu entfernen. Die Entfernungseinheit 22 ist optional.

Stromabwärts der Entfernungseinheit 22 ist eine Mischeinheit 23 angeordnet. In der Mischeinheit 23 kann der Produktstrom des Wasserstoffgases mit einem weiteren Wasserstoffstrom gemischt werden. Stromabwärts der Mischeinheit 23 ist eine Wasserstoffgasleitung 24 insbesondere in Form einer Wasserstoffgaspipeline, angeordnet, die Teil eines, insbesondere öffentlichen, Leitungsnetzwerkes sein kann. Über die Wasserstoffgasleitung 24 ist die Anlage 1b insbesondere mit einem Wasserstoffgasverbraucher 25 verbunden, der insbesondere als Brennstoffzelle, insbesondere als SOFC oder als PEM-Brennstoffzelle, ausgeführt ist.

Der Spülgasstrom wird aus dem jeweiligen Adsorberbehälter 20 zum Entfernen der Verunreinigungen aus dem abgetrennten Wasserstoffgas einer nachfolgenden Reinigungsprozedur unterworfen. Dazu sind stromabwärts des Adsorberbehälters 20, insbesondere in dieser Reihenfolge, eine Kompressionseinheit 26 als erste Reinigungseinheit 9, ein Hydrierreaktor 27, ein Kondensator 28 und eine Einheit 29 zur Bereitstellung von nicht-thermischen Plasma vorhanden. Stromabwärts der Einheit 29 ist ein zweites Wasserstoffgas-Analytikgerät 21 angeordnet, das identisch zu dem Wasserstoffgas-Analytikgerät 21 ausgebildet ist, das stromabwärts des Adsorberbehälters 20 mit dem Produktstrom angeordnet ist. Mit dem Wasserstoffgas-Analytikgerät 21 kann der Anteil an Verunreinigungen in dem Spülgasstrom ermittelt werden.

Stromabwärts des Wasserstoffgas-Analytikgerät 21 ist ein zweites Splitventil 30 angeordnet. Dadurch ist es möglich, den gereinigten Spülgasstrom zu dem Adsorberbehälter 20 zum erneuten Spülen mittels einer Rückführleitung 31 zurückzuführen, der Mischeinheit 23 zuzuführen und mit dem Produktstrom des Wasserstoffgases aus dem Adsorberbehälter im Adsorptionsbetrieb zu mischen und/oder in einer Luft-Mischkammer 32 mit Luft zu mischen und anschließend an die Umgebung abzugeben.

Nachfolgend wird ein Verfahren zum Entfernen von Verunreinigungen von Wasserstoffgas näher erläutert.

Zunächst wird ein Trägermaterial, insbesondere Perhydro-Dibenzyltoluol, in dem Dehydrierreaktor 4 katalytisch dehydriert. Dadurch wird das Trägermaterial zumindest teilweise entladen, also dehydriert und dadurch Wasserstoffgas freigesetzt. Ein Gemisch aus Wasserstoffgas und Trägermaterial wird aus dem Dehydrierreaktor 4 abgeführt und in der Einheit 5b vorgereinigt. In Tabelle 1 sind die Bestandteile des Gemisches vor und nach der Einheit 5b zusammengefasst.

**Tabelle 1: Zusammensetzung des aus dem Dehydrierreaktor 4 abgeführten Gemisches umfassend Wasserstoffgas und Trägermaterial**

| Substanz | [µmol/mol] vor Einheit 5b | [µmol/mol] nach Einheit 5b |
|---|---|---|
| CO | 0,17 | 0,17 |
| CH₄ | 17,15 | 30 |
| Benzol | 23 | 21 |
| Cyclohexan | 29,4 | 10 |
| Toluol | 55,5 | 15 |
| MCH | 111,2 | 11 |
| Xylol | 2,7 | 1 |
| DMCH | 31 | 0 |
| H₁₂-BT | 15 | 5 |
| H₀-BT | 1 | 4 |
| H₂O | 140 | 150 |
| H₂ | 99,95% | 99,97% |

Stromabwärts des Gaswäschers kann eine optionale Kühleinheit angeordnet sein. Nach der optionalen Kühleinheit gelangt das Gemisch zu dem ersten Splitventil 19, mit dem das Gemisch in zwei Teilströme aufgeteilt wird. Der erste Teilstrom wird durch den in Fig. 1 links dargestellten Adsorberbehälter 20 im Adsorbtionsbetrieb, also im Regelbetrieb, geführt. Nebenprodukte und/oder Verunreinigungen werden an der Adsorberschüttung adsorbiert und aus dem Wasserstoffgas abgetrennt. Das gereinigte Wasserstoffgas wird aus dem Adsorberbehälter 20 abgeführt, wobei die Reinheit des gereinigten Wasserstoffgases in dem Wasserstoffgas-Analytikgerät 21 überprüft wird. In der Entfernungseinheit 22 kann gegebenenfalls eine weitere Reinigung erfolgen, bevor das gereinigte Wasserstoffgas der Mischeinheit 21 zugeführt und an den Wasserstoffgasverbraucher 25 weitergeleitet wird.

Der zweite Teilstrom wird als Spülgas durch den anderen Adsorberbehälter 20, der in Fig. 1 rechts dargestellt ist, geleitet. Der Spülgasstrom wird entgegengesetzter Richtung zu dem Produktgasstrom durch den Adsorberbehälter 20 geleitet, in Fig. 1 also von unten nach oben. Dadurch, dass im Spülbetrieb der Adsorberbehälter 20 im Gegenstrom gespült wird, können insbesondere auch stark adsorbierende, also schlecht desorbierbare, Benzyltoluol-Moleküle ausgespült werden. Dadurch wird vermieden, dass die Benzyltoluol-Moleküle an der Aktivkohle, die als Adsorbermaterial verwendet wird, adsorbieren und insbesondere die Kapazität der Aktivkohle verringern. Um die Triebkraft für eine Desorption der Nebenprodukte vom Adsorbermaterial zu schaffen, wird insbesondere im Adsorberbehälter 20 ein Druckwechsel, insbesondere eine Druckreduktion, und/oder Temperaturerhöhung durchgeführt.

Das Verhältnis der Stoffströme von Produktgasstrom zu Spülgasstrom ist groß und beträgt insbesondere mindestens 19: 1. Es wurde gefunden, dass der Energieaufwand zum Entfernen von Verunreinigungen aus dem Spülgasstrom umso geringer ist, je größer das Verhältnis von Produktgasstrom zu Spülgasstrom festgelegt ist. Insbesondere werden die Betriebsweisen "Adsorberbetrieb" und "Spülbetrieb" gewechselt, insbesondere zyklisch.

Der Spülgasstrom ist einem hohen Anteil an Nebenprodukten versehen und verlässt den Adsorberbehälter 20. Insbesondere ist die Konzentration an Nebenprodukten um das zwanzigfache bis zweihundertfache gegenüber dem Produktgasstrom aus dem Adsorberbehälter 20 in Adsorberbetrieb erhöht. Entsprechend ist das Aufreinigungsverfahren für den Spülgasstrom vereinfacht und energieeffizient durchführbar. Insbesondere ist der jeweilige Energieaufwand für Kühlung, Heizung und/oder Kompression vermindert, da dies jeweils nur für einen mengenreduzierten Teilstrom durchgeführt wird. Außerdem sind konzentrationsabhängige Prozesse und/oder Reaktionen beschleunigt durchführbar. Durch die Aufkonzentration der Nebenprodukte sind deren Partialdrücke in dem Gemisch erhöht. Kondensierbare Kohlenwasserstoffe, insbesondere Benzyltoluol, Methan, Dimethylcyclohexan, Methylcyclohexan, Toluol und/oder Benzol sowie Wasser können mittels Kompression in der Kompressionseinheit 26 und durch Kühlung indem Kondensator 28 mit reduziertem Aufwand effizient auskondensiert werden.

Insbesondere wird in der Kompressionseinheit 26 durch polytrope Kompression der Druck auf mehr als 5bar, insbesondere mehr als 10bar und insbesondere mehr als 30bar erhöht, sodass gleichzeitig sich die Gastemperatur erhöht.

Im nachfolgenden Hydrierschritt im Hydrierreaktor 27 wird die Hydrierreaktion wegen des erhöhten Drucks und dem sich daraus ergebenden chemischen Gleichgewicht und wegen der erhöhten Temperatur entsprechend der Arrhenius-Gleichung begünstigt.

Es wurde also insbesondere erkannt, dass eine besonders effiziente Entfernung von Verunreinigungen aus dem Spülgasstrom möglich ist, wenn einerseits das Verhältnis von Spülgas zu Verunreinigungen klein ist und andererseits die Reinigungsschritte Kompression, Hydrierung und Kondensation, insbesondere in dieser Reihenfolge, durchgeführt werden.

Nach der Kompression in der Kompressionseinheit 26 weist der Spülgasstrom noch aromatische Substanzen und Kohlenmonoxid auf. In dem Hydrierreaktor 27 findet insbesondere eine adiabate Hydrierreaktion statt. Dadurch werden die aromatischen Verbindungen mittels des Wasserstoffs in einem Temperaturbereich zwischen 20 °C und 180 °C zu mehr als 90% hydriert. Außerdem findet zumindest eine teilweise Hydrierung von Kohlenmonoxid statt.

Als besonders vorteilhaft haben sich Katalysatormaterialien erwiesen, die katalytisch aktive Materialien, insbesondere Metalle mit Hydrierfunktionalität aufweisen wie insbesondere Edelmetalle, insbesondere Platin, Palladium, Iridium, Rhenium oder Ruthenium. Insbesondere vorteilhaft haben sich Ruthenium oder alternativ Nickelkatalysatoren erwiesen. Mit Blick auf das Gesamtverfahren ermöglicht der Hydrierschritt mehrere Vorteile:
- Durch die Hydrierung der aromatischen Verbindungen, insbesondere Benzol, kann die Schädlichkeit dieser Stoffe reduziert werden und die Abgabe dieser Abgase an die Umwelt wird dadurch ermöglicht. Insbesondere wurde gefunden, dass die durch gesetzliche Vorgaben wie beispielsweise TA-Luft vorgegebenen Grenzwerte eingehalten werden.
- Durch das Hydrieren der aromatischen Verbindungen zu Cycloalkanen steigt der Dampfdruck dieser Komponenten, wodurch sich der Taupunkt des Gasgemisches erniedrigt. Dadurch kann die Rückführquote des Spülgasstroms und dadurch die Wiederverwendung, erhöht werden. Ein derartiges Verfahren ist bezüglich des Gesamtwirkungsgrads besonders effizient. Dies ist insbesondere für einen Wasserstoffgasstrom mit der Qualität Grade-A relevant.

Für die Entfernung von Kohlenmonoxid, insbesondere bei der geforderten Qualität Grade-D, ist es auch möglich, zusätzlich oder alternativ den Hydrierreaktor 27 dem Adsorbtionsverfahren 20 voranzustellen. Dadurch werden die folgenden weiteren Vorteile erzielt:
- Durch Eliminierung von Kohlenmonoxid ist die Auslegung des Adsorberbetriebs, insbesondere der Adsorberbehälter 20, vereinfacht. Kohlenmonoxid ist ein schweradsorbierbares Molekül und bestimmt somit Zykluszeit und/oder Spülgasverluste im Adsorbtionsverfahren. Ohne Kohlenmonoxid können geringere Spülgasmengen realisiert werden.
- Durch die Umsetzung von Kohlenmonoxid zu Methan kann insbesondere für Wasserstoff mit der Qualität Grade-D ein großzügigerer Grenzwert ausgenutzt werden, da der Grenzwert für Methan beispielsweise um das fünfhundertfache höher liegt als der für Kohlenmonoxid. Dadurch ist der Aufwand der Aufreinigung signifikant reduziert.

Der um aromatische Substanzen gereinigte Strom des Spülgases wird nachfolgend im Kondensator 28 gekühlt, insbesondere bei einer Temperatur von größer als 0 °C. Dadurch kann eine Eisbildung im Kondensator 28 vermieden werden. Aus dem Kondensator 28 kann ein auskondensierter Flüssigstrom über eine Flüssigkeitsabführleitung 33 abgeführt werden. Dieser Flüssigkeitsstrom umfasst großteils ringförmige Kohlenwasserstoffe, die insbesondere nach Abdekantieren von auskondensiertem Wasser in den Trägermaterial-Kreislauf zurückgeführt werden können. Insbesondere wird der Kondensator 28 so betrieben, dass dem Spülgasstrom mindestens 50Gew.-% der kondensierbaren Stoffe entfernt werden.

Nach dem Kondensator 28 ist der Gasstrom zum Großteil von kondensierbaren Stoffen befreit. Dieser Strom kann dem Nicht-thermischen-Plasma-Reaktor 29 zugeführt werden. In dem Nicht-thermischen-Plasma-Reaktor 29 können restliche höhermolekulare und kondensierbare Kohlenwasserstoffverbindungen zu kleineren, nicht-kondensierbaren Kohlenwasserstoffverbindungen, insbesondere Methan, umgewandelt und/oder gespalten werden. Der Nicht-thermische-Plasma-Reaktor 29 kann auch stromaufwärts des Kondensators 28 angeordnet sein.

Durch die Behandlung des Gaststroms in dem Nicht-thermischen-Plasma-Reaktor 29 kann der Grenzwert für den gesamten Kohlenwasserstoff für die Qualität Grade-D beziehungsweise für die Einhaltung des Kohlenwasserstoff-Taupunkts für die Qualität Grade-A eingehalten bzw. vereinfacht werden. Um die Energieeffizienz des Reaktors 29 zu erhöhen, wird dieser vorzugsweise bei erhöhten Temperaturen betrieben, insbesondere bei Temperaturen größer 50 °C, insbesondere bei Temperaturen größer 100 °C und insbesondere bei Temperaturen größer als 180 °C oder insbesondere bei Temperaturen größer 250 °C. Ein Teil der Wärme des Reaktors 29 kann durch Rekuperation, insbesondere eines Teilstroms nach dem Hydrierreaktor 27 vorteilhaft und energieeffizient bereitgestellt werden.

In den Plasma-Reaktor 29 können energiereiche Spezies wie Elektronen, Radikale, Ionen, Moleküle und/oder ultraviolette Strahlung, einen Dissoziationsprozess an CH-Bindungen von aromatischen Kohlenwasserstoffverbindungen einleiten.

Die CH-Bindungen haben die vergleichsweise geringste Energie. Die energiereichen Spezies sind in dem Plasma vorhanden. Durch die Einleitung des Dissoziationsprozesses wird eine Kettenreaktion ausgelöst, die mit der Dissoziation der aromatischen Ketten zusammenhängen könnte, bei der die zyklischen Verbindungen in kürzere geradkettige aliphatische Verbindungen umgewandelt werden. Das Ausmaß der Dissoziation ist insbesondere abhängig von der Verweilzeit im Plasma. Eine typische dielektrische Barriereentladung, die in einem Rohrreaktor, der insbesondere aus dielektrischen Materialien wie Keramik, Kunststoff und/oder Glas hergestellt ist, durch Anbringen von Metallelektroden an der Innen- und Außenseite des Rohrreaktors erzeugt wird, könnte ein Nicht-thermisches-Plasma im Inneren des Rohres erzeugen, durch das das Spülgas behandelt werden kann.

Nach dem Plasma-Reaktor 29 wird die Reinheit des Spülgasstroms in dem Wasserstoffgas-Analytikgerät 21 überprüft und insbesondere die Anteile von Methan, Wasser, Kohlenmonoxid und Gesamtkohlenwasserstoff bestimmt. In Abhängigkeit des Messergebnisses und des Messergebnisses des Produktgasstroms in dem Wasserstoffgas-Analytikgerät 21 nach dem Adsorberbehälter 20 wird ein Mischungsverhältnis mittels des zweiten Splitventils 30 für die Mischeinheit 23 eingestellt. Insbesondere wird das Mischungsverhältnis so eingestellt, dass die geforderte Wasserstoffqualität, insbesondere ISO Grade-A oder ISO Grade-D, des Wasserstoffgases in der Wasserstoffgasleitung 24 vorliegt. Durch die Messungen in den Wasserstoffgas-Analytikgeräten 21 und die Mischung der Gasströme in der Mischeinheit 23 kann die Wasserstoffgasausbeute insgesamt erhöht und die zu emittierende Gasmenge reduziert werden. Da der verbleibende Gasstrom ausschließlich niedermolekulare und/oder schlecht adsorbierbare Kohlenwasserstoffverbindungen enthält, kann zumindest ein Teil davon recycelt, also über die Rückführleitung 31 als Spülgas in dem Adsorberbehälter 20 wiederverwendet werden. Ein Restgasstrom kann aus dem zweiten Splitventil 30 enthält aufgrund der zuvor durchgeführten Reinigungsverfahren eine deutlich reduzierte Menge an schädlichen Aromaten und/oder kondensierbaren Kohlenwasserstoffverbindungen. Trotzdem ist diese Konzentration aufgrund des hohen Aufteilungsverhältnisses in dem ersten Splitventil 19 noch so hoch, dass die zulässige Maximalkonzentration, die beispielsweise durch TA-Luft vorgegeben wird, überschritten ist. Zu diesem Zweck kann mittels der Luftmischkammer 32 dem Restgasstrom ein Verdünnungsgas, insbesondere Luft, zugegeben werden, um die Absolutmenge, aber auch die erforderlichen Konzentrationen gemäß TA-Luft zu unterschreiten.

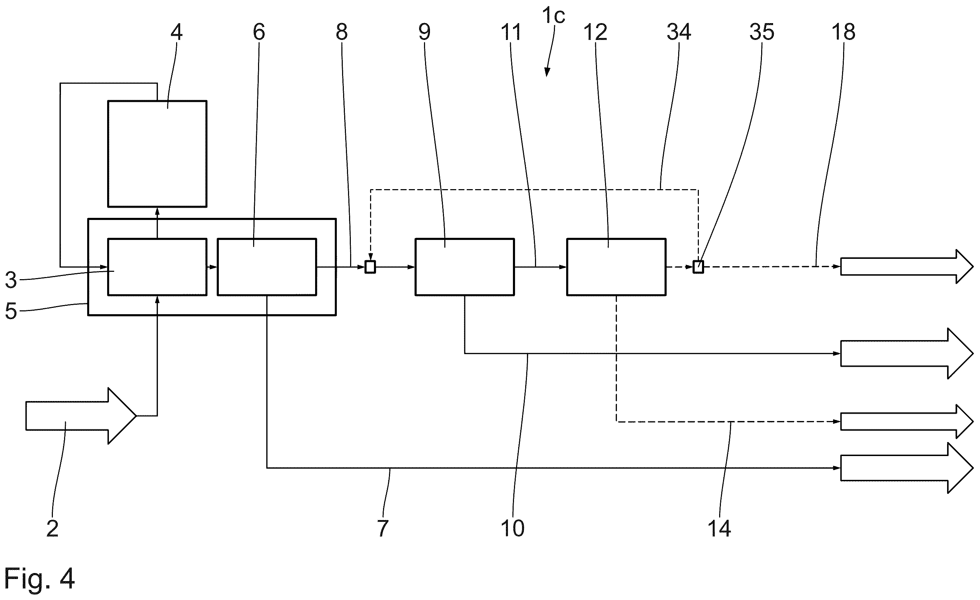

Im Folgenden wird unter Bezugnahme auf Fig. 4 ein weiteres Ausführungsbeispiel einer Anlage beschrieben. Konstruktiv identische Bauteile erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c.

Die zweite Reinigungseinheit 12 ist als Abscheideeinheit ausgeführt, insbesondere zur Druckwechseladsorption. Mittels der Wasserstoffgasabführleitung 14 wird aufgereinigtes Wasserstoffgas abgeführt.

Stromaufwärts der zweiten Reinigungseinheit 12 ist die erste Reinigungseinheit 9 angeordnet. Die erste Reinigungseinheit 9 umfasst eine Kompression und Kühlung. Der in der ersten Reinigungseinheit 9 gereinigte Stoffstrom wird mittels einer Reinigungsleitung 11 der zweiten Reinigungseinheit 12 zugeführt. Verunreinigungen können aus der ersten Reinigungseinheit 9 mittels der ersten Verunreinigungsleitung 10, insbesondere in flüssiger Form, abgeführt werden.

Bei der Anlage 1c kann ein aus der zweiten Reinigungseinheit 12 abgeführter Strom, insbesondere ein abgeschiedener Spülgasstrom, mittels einer Rückführleitung 34 zurückgeführt werden, insbesondere stromaufwärts der ersten Reinigungseinheit. Der rückgeführte Spülgasstrom kann also unmittelbar der Kompression und Kühlung wieder zugeführt werden.

Gemäß dem gezeigten Ausführungsbeispiel ist die erste Reinigungseinheit 9 mit der Kompression und Kühlung Teil der Nachreinigung. Es ist zusätzlich oder alternativ denkbar, dass die Kompression und Kühlung in der Einheit zum Vorreinigen 5 integriert ist, insbesondere stromabwärts des Phasentrenners 6.

Das Abzweigventil 35 ist optional.

Gemäß dem gezeigten Ausführungsbeispiel ist ein schaltbares, insbesondere regelbares Abzweigventil 35 stromabwärts der zweiten Reinigungseinheit 12 angeordnet. Mit dem Abzweigventil 35 kann der Anteil des Spülgasstroms, der in die Rückführleitung 34 abgezweigt wird, veränderlich eingestellt werden. Insbesondere ist das Abzweigventil 35 derart ausgeführt, dass eine Rückführung mit einem Anteil zwischen 0% und 100%, also keine Rückführung bis vollständige Rückführung des Spülgasstroms, ermöglicht ist. Der nicht rückgeführte Anteil passiert das Abzweigventil 35 und wird mittels der Wasserstoffgasleitung 18 einer Abgasverwertung zugeführt.

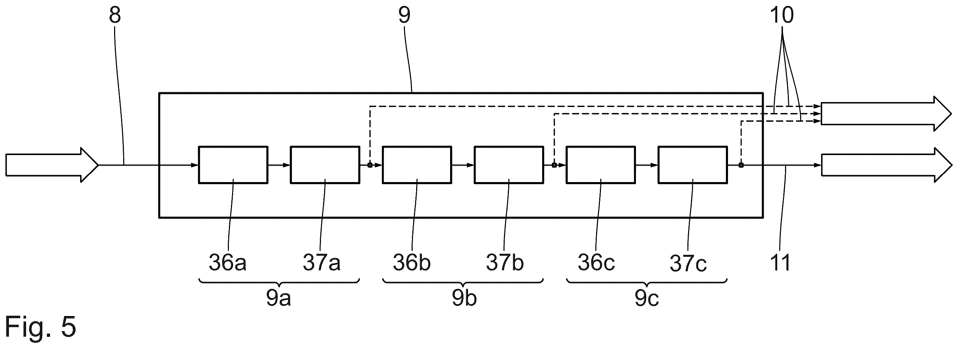

Im Folgenden wird unter Bezugnahme auf Fig. 5 eine Ausführung der ersten Reinigungseinheit 9 näher beschrieben.

Die in Fig. 5 gezeigte erste Reinigungseinheit 9 kann, wie vorstehend insbesondere anhand von Fig. 4 dargestellt, stromabwärts der Einheit zum Vorreinigen 5 angeordnet oder in der Einheit zum Vorreinigen 5 integriert angeordnet sein.

Die erste Reinigungseinheit 9 ist mehrstufig ausgeführt. Das bedeutet, dass die erste Reinigungseinheit 9 eine erste Kompressionsstufe 36a und eine nachgeschaltete erste Kühlstufe 37a umfasst. Diese Elemente bilden die erste Stufe 9a. Die Stufe 9a umfasst auch eine Abzweigung einer Verunreinigungsleitung, um kondensierte Verunreinigungen abzuleiten. Die nachfolgenden Stufen 9b und 9c sind jeweils identisch ausgeführt. Stromabwärts der dritten Stufe 9c ist die Reinigungsleitung 11 angeschlossen, die insbesondere an die zweite Reinigungseinheit 12 angeschlossen ist. Es versteht sich, dass die Anzahl der Reinigungsstufen variieren kann. Besonders vorteilhaft ist es, wenn mindestens zwei Reinigungsstufen vorhanden sind.

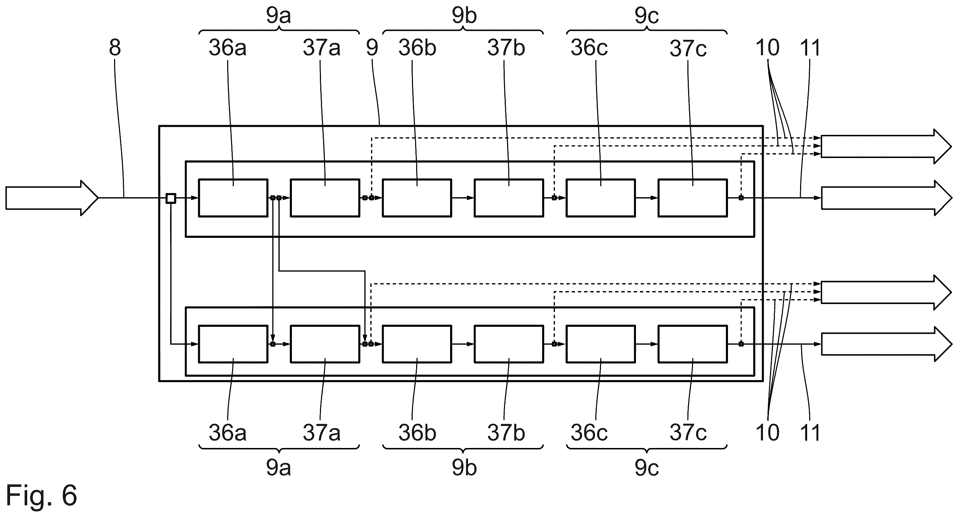

Nachfolgend wird anhand von Fig. 6 eine weitere Ausgestaltung der ersten Reinigungseinheit 9 erläutert.

Wie bei dem vorherigen Ausführungsbeispiel ist die erste Reinigungseinheit 9 mehrstufig ausgeführt. Zusätzlich weist die erste Reinigungseinheit 9 mehrere, gemäß dem gezeigten Ausführungsbeispiel zwei, parallele Leitungsstränge auf. Eine Aufteilung in die beiden Leitungsstränge erfolgt unmittelbar am Eingang der ersten Reinigungseinheit 9, also noch vor der ersten Kompressionsstufe 36a. Insbesondere sind die beiden Stränge in der ersten Reinigungseinheit 9 identisch ausgeführt. Durch die Parallelität der Stränge wird eine Redundanz zur Verfügung gestellt. Das Ausfallrisiko der ersten Reinigungseinheit ist dadurch minimiert und insbesondere ausgeschlossen.

Die hier gezeigte Ausführung der ersten Reinigungseinheit 9 hat den Vorteil, dass ein Vereisen einer Kühleinheit kompensiert werden kann. Dargestellt in Fig. 6 ist der Fall, dass die erste Kühlstufe 37a des unteren Leitungsstrangs vereist ist. Es ist möglich, Gas aus dem ersten, in Fig. 6 oberen Leitungsstrang dem zweiten Leitungsstrang zuzuführen, insbesondere stromaufwärts der ersten Kühlstufe. Das warme Gas kann ein Vereisen der ersten Kühlstufe 37a im unteren Strang vermeiden und insbesondere eine bereits vereiste Kühlstufe wieder auftauen. Das entsprechend gekühlte Gas kann anschließend dem ersten Leitungsstrang wieder rückgeführt werden. Die entsprechenden Verbindungsleitungen sind in Fig. 6 dargestellt. Es ist auch denkbar, dass das gekühlte Gas an einer anderen Stelle dem ersten Leitungsstrang wieder zugeführt wird. Es versteht sich, dass flexible Leitungsverbindungen vorteilhaft sind, um eine möglichst große Flexibilität bezüglich der Vermeidung von Vereisungen vorzubeugen.

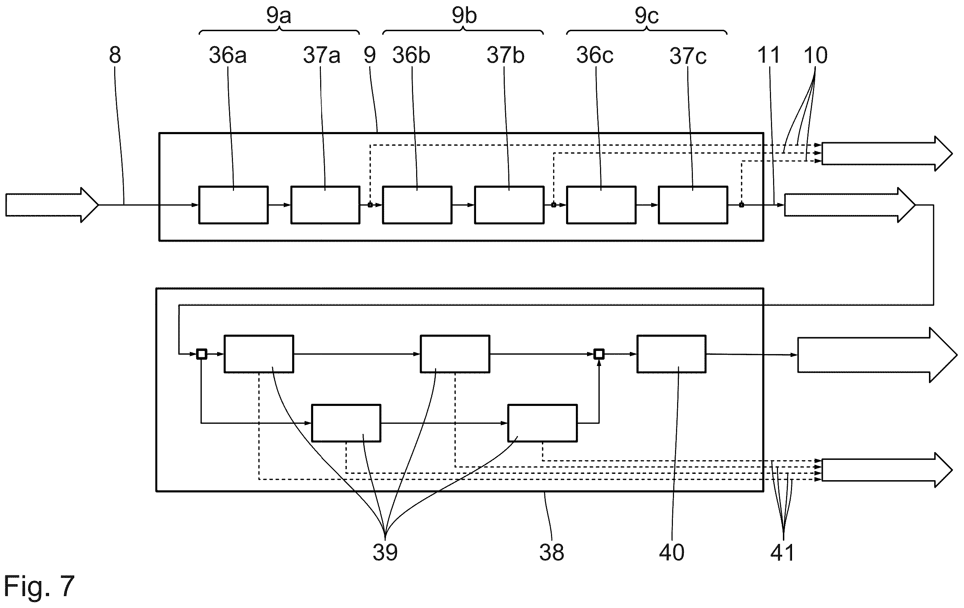

Nachfolgend wird anhand von Fig. 7 eine weitere Ausgestaltung einer ersten Reinigungseinheit erläutert.

Im Unterschied zu den vorherigen Ausführungsformen ist die erste Reinigungseinheit 9 mehrstufig ausgeführt, wobei stromabwärts der ersten Reinigungseinheit 9 eine zusätzliche Kühleinheit 38 angeordnet ist.

Die zusätzliche Kühleinheit 38 ermöglicht eine flexible Anpassung des zumindest teilweise gereinigten Wasserstoffgasstroms auf eine gewünschte Zieltemperatur. Dazu kann die zusätzliche Kühleinheit mehrere in Reihe und/oder parallel geschaltete Kühlaggregate 39 aufweisen.

Stromabwärts der Kühlaggregate 39 weist die zusätzliche Kühleinheit 38 ein Temperieraggregat 40 auf. Das Temperieraggregat 40 ermöglicht insbesondere auch ein Erwärmen, insbesondere Heizen des Mediums in der zusätzlichen Kühleinheit 38. Das Temperieraggregat 40 ist optional. An die Kühlaggregate 39 kann jeweils eine Kondensatabführleitung 41 angeschlossen sein. Entsprechend dem vorherigen Ausführungsbeispiel gemäß Fig. 6 dienen die Kühlaggregate 39 in der zusätzlichen Kühleinheit 38 in ihrer redundanten Anordnung, um ein Vereisen einzelner Aggregate zu verhindern. Dazu können die Kühlaggregate 39 jeweils mit externem Kühlmedium beschickt werden.

## Patentansprüche

1. Verfahren zum Reinigen von Wasserstoffgas umfassend die Verfahrensschritte
- katalytisches Dehydrieren eines organischen Trägermaterials in einem Dehydrierreaktor (4) und dadurch Freisetzen von Wasserstoffgas,
- Abführen eines Gemisches umfassend Wasserstoffgas und zumindest teilweise entladenes Trägermaterial aus dem Dehydrierreaktor (4),
- Vorreinigen des Gemisches durch Abtrennen zumindest eines Teils des Trägermaterials von dem Wasserstoffgas,
- Nachreinigen des abgetrennten Wasserstoffgases umfassend die Nachreinigungsschritte
-- Kompression und Kühlung, und/oder
-- Abscheiden von Verunreinigungen durch adsorptive Aufreinigung und/oder durch Membranfiltration.

2. Verfahren gemäß Anspruch 1, **dadurch gekennzeichnet, dass** das Vorreinigen umfasst eine Rekuperation und/oder eine Kühlung und/oder eine Phasentrennung und/oder eine Gaswaschung, insbesondere durch Absorption mittels direkten Fluidkontakts, und/oder eine Kompression.

3. Verfahren gemäß einem der vorstehenden Ansprüche, **dadurch gekennzeichnet, dass** das Nachreinigen zunächst das Abscheiden von Verunreinigungen durch adsorptive Aufreinigung und/oder durch Membranfiltration umfasst, wobei ein abgeschiedener Spülgasstrom, der die Verunreinigungen umfasst, der Kompression und Kühlung zugeführt wird.

4. Verfahren gemäß Anspruch 3, **dadurch gekennzeichnet, dass** die Kompression und Kühlung, der der abgeschiedene Spülgasstrom zugeführt wird, stromaufwärts des Abscheidens der Verunreinigungen angeordnet ist.

5. Verfahren gemäß Anspruch 1 oder 2, **dadurch gekennzeichnet, dass** das Nachreinigen zunächst die Kompression und Kühlung umfasst, wobei ein gereinigter Teilstrom, der Wasserstoffgas umfasst, dem Abscheiden von Verunreinigungen durch adsorptive Aufreinigung und/oder durch Membranfiltration zugeführt wird.

6. Verfahren gemäß einem der vorstehenden Ansprüche, **dadurch gekennzeichnet, dass** die adsorptive Aufreinigung des abgetrennten Wasserstoffgases in einem Adsorberbehälter (12) erfolgt, insbesondere durch zyklische Druck- und/oder Temperaturwechseladsorption, wobei in dem Adsorberbehälter (12) mindestens ein Adsorbermaterial angeordnet ist, an dem die Verunreinigungen adsorbiert werden.

7. Verfahren gemäß Anspruch 6, **dadurch gekennzeichnet, dass** in dem Adsorberbehälter (12) unterschiedliche Adsorbermaterialen angeordnet sind.

8. Verfahren gemäß Anspruch 6 oder 7, **dadurch gekennzeichnet, dass** der Adsorberbehälter (12) mittels eines Spülgases, insbesondere Wasserstoffgas, gespült wird.

9. Verfahren gemäß Anspruch 8, **dadurch gekennzeichnet, dass** das Verhältnis der Stoffströme von Wasserstoffgas zum adsorptiven Aufreinigen und von Wasserstoffgas zum Spülen mindestens 19 : 1 beträgt, insbesondere mindestens 49 : 1, insbesondere mindestens 99 : 1 und insbesondere mindestens 199 : 1.

10. Verfahren gemäß einem der vorstehenden Ansprüche, **gekennzeichnet durch** ein Verbrennen einer Wasserstoff enthaltenden Verunreinigung, wobei insbesondere die Verbrennungswärme an den Dehydrierreaktor (4) übertragen wird.

11. Verfahren gemäß einem der vorstehenden Ansprüche, **dadurch gekennzeichnet, dass** ein Wasserstoffverlust höchstens 5 mol-% bezogen auf den Anteil des Wasserstoffgases in dem Gemisch vor dem Vorreinigen umfasst.

12. Verfahren gemäß einem der vorstehenden Ansprüche, **gekennzeichnet durch** ein geregeltes Durchführen der Verfahrensschritte mittels einer Regelungseinheit.

13. Verfahren gemäß einem der vorstehenden Ansprüche, **dadurch gekennzeichnet, dass** die Kompression und Kühlung, insbesondere beim Nachreinigen, mehrstufig erfolgt.

14. Verfahren gemäß Anspruch 13, **dadurch gekennzeichnet, dass** stromabwärts der Kompression und Kühlung eine zusätzliche Kühlung des zumindest teilweise gereinigten Wasserstoffgases erfolgt.

15. Verfahren gemäß einem der vorstehenden Ansprüche, **dadurch gekennzeichnet, dass** die Kompression und Kühlung mehrere parallele Stränge aufweist, wobei jeder Strang mindestens eine Kompression und mindestens eine Kühlung umfasst.
